# DEMANDE DE BREVET EUROPEEN

(11) **EP 1 977 715 A1**
(43) Date de publication de la demande: **08.10.2008**
(21) Numéro de dépôt: 08103364.9
(22) Date de dépôt: 03.04.2008
(51) Int. Cl.: A61C 1/04

(54) **Dispositif de commande d'outil tournant de dentiste**

(30) Priorité: 03.04.2007 FR 0754248
(71) Demandeur: Heraud, Roger, 33480 Avensan (FR); Maillard, Thierry, 33185 LeHaillan (FR)
(72) Inventeur: Heraud, Roger, 33480 Avensan (FR); Maillard, Thierry, 33185 LeHaillan (FR)
(74) Mandataire: Schmit, Christian Norbert Marie

(57) **Abrégé**

L'objet de l'invention est un dispositif (1) de commande d'un appareil (2a, 2b) de traitement dentaire pilotant des outils tournants (3), le dispositif comprenant une première pédale (4) de commande marche/arrêt d'un moteur (5) d'entraînement de l'outil comprenant en outre une seconde pédale (6) commandant le changement de paramètres de fonctionnement de l'appareil de traitement dentaire en fonction de séquences d'outils et l'affichage (8) desdits outils, paramètres et séquences sur l'appareil.

L'invention concerne en outre un système de traitement dentaire comportant un dispositif de commande tel que défini ci-dessus et un appareil de traitement dentaire, l'appareil et le dispositif comportant des moyens de communication et de dialogue l'un avec l'autre.

## Description

La présente invention concerne un perfectionnement aux dispositifs de commande d'outils tournants de dentistes.

Le dispositif de la présente invention est utilisable dans le cadre de l'endodontie et de l'implantologie et a pour but de faciliter le travail du praticien.

Il est connu de commander la rotation d'un moteur entraînant des de limes de dentistes ou autres outils tournants par un bouton poussoir sur le contre angle (porte outil) ou par une pédale à fil ou sans fil reliée à un appareil de traitement dentaire pilotant le moteur.

Le bouton poussoir ou la pédale commande le fonctionnement marche/arrêt du moteur entraînant l'outil tournant.

L'usage d'une pédale permet de libérer les deux mains du praticien qui opère dans la bouche d'un patient.

Par ailleurs, de nombreux outils de dentistes se présentent sous forme de séries d'outils comme par exemple les limes de dentiste qui sont organisées en séries de diamètre croissant appelées séquences et adaptées à des formes de canal apical ou des courbures de dents données.

Les appareils de traitement dentaires équipés de tels outils comportent des moyens de réglage de couple et vitesse de rotation des moteurs d'entraînements de ces outils adaptés à de telles séquences, ces moyens étant accessibles en face avant de l'appareil.

Des exemples d'appareils de traitement dentaire pourvus d'outils en séquence et de moyens de commande de la rotation du moteur les entraînant sont connus notamment des documents W095 13032 A1 et FR2 876 898 A1.

Pour permettre un contrôle de la puissance du moteur à distance, le document JP2002219137 prévoit une télécommande sans fil pourvue d'autres fonctions telles que la commande de l'ouverture ou de la fermeture d'un jet ou l'allumage et l'extinction d'une lampe.

Il reste qu'il n'est pas à ce jour prévu de moyens distants commodes pour sélectionner les séquences ou changer les paramètres moteur en fonction des limes ou autres outils employés.

La présente invention perfectionne les dispositifs de pilotage des appareils de traitement dentaire en accroissant le nombre de fonctions que le praticien peut commander au pied en permettant en particulier de sélectionner des paramètres de l'appareil de traitement. La présente invention prévoit pour ce faire un dispositif de commande d'un appareil de traitement dentaire pilotant des outils tournants, le dispositif comprenant une première pédale de commande marche/arrêt d'un moteur d'entraînement de l'outil, caractérisé en ce qu'il comprend une seconde pédale commandant le changement de paramètres de fonctionnement de l'appareil de traitement dentaire en fonction des séquences d'outils et l'affichage desdits outils, paramètres et séquences sur l'appareil.

L'invention concerne en outre un système de traitement dentaire comportant un dispositif de commande selon l'invention et un appareil de traitement dentaire, l'appareil et le dispositif comportant des moyens de communication et de dialogue l'un avec l'autre.

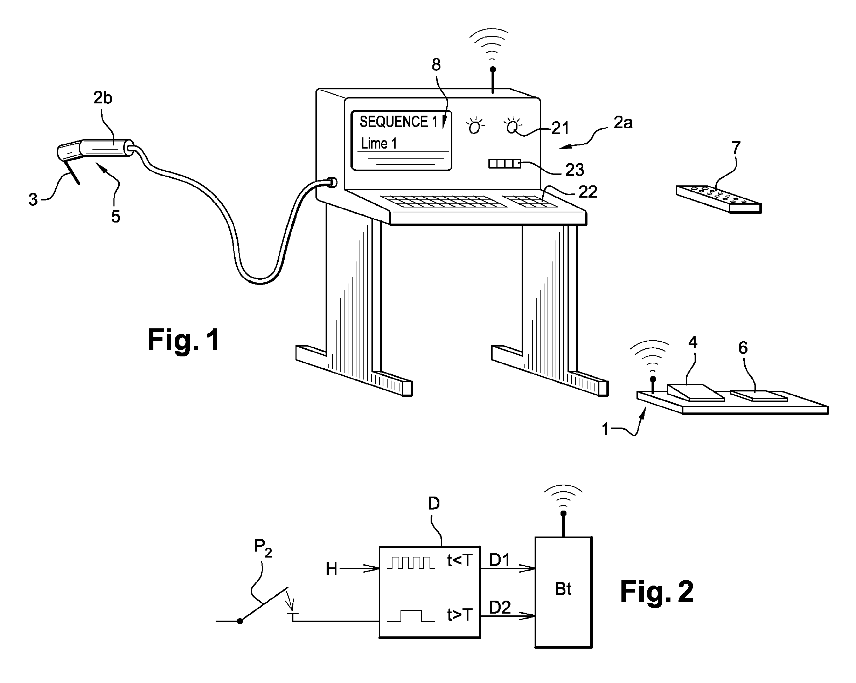

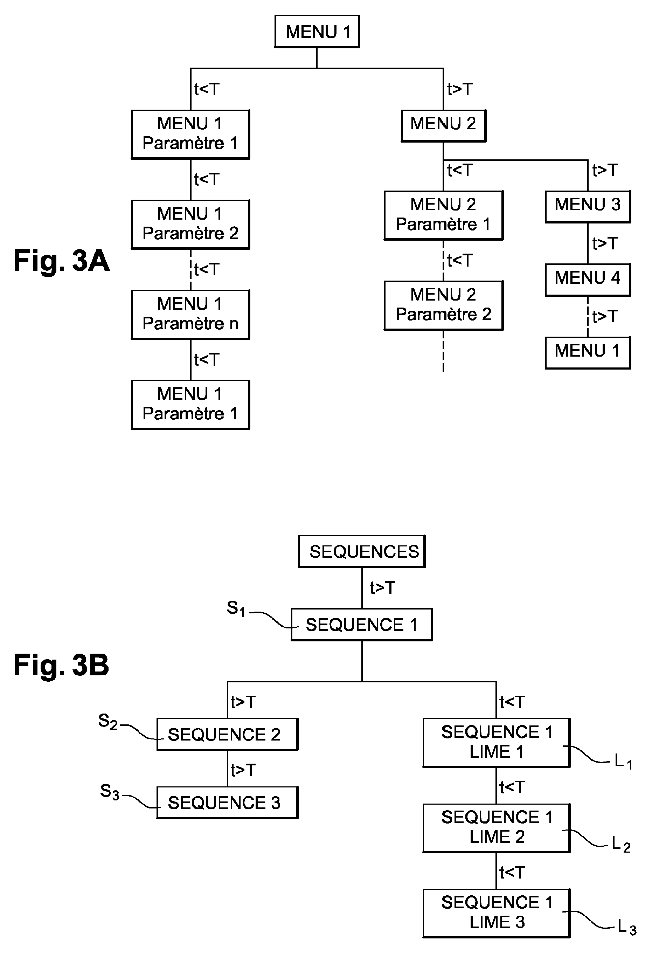

D'autres caractéristiques et avantages de l'invention seront apparents à la lecture de la description qui suit en référence aux dessins qui représentent:
en figure 1: une vue schématique d'un système de traitement dentaire comportant un dispositif et un appareil selon l'invention;
en figure 2: un détail d'un mode de réalisation du dispositif de l'invention,
aux figures 3A et 3B: des synoptiques de sélection de modes de fonctionnement de l'appareil de la figure 1 selon un mode de réalisation particulier.

La figure 1 représente un système de traitement dentaire comportant un appareil de traitement 2a relié à un contre angle 2b porte outils pilotant des outils tournants 3.

L'appareil est adapté à piloter le moteur 5 disposé dans le contre angle 2b et notamment de régler la vitesse de rotation du moteur, le couple maximum, l'arrêt et le retour arrière, dans le cas d'un début de vissage de l'outil dans la dent, et comprend d'autres fonction telles que la détection de la fin de canal apical comme connu dans la pratique.

Pour permettre au praticien de spécifier les données correspondantes au travail qu'il veut effectuer, l'appareil est un appareil à microprocesseur comportant des moyens 21, 22, 23 de saisie de données et des moyens d'affichage 8.

Par exemple, en fonction de la courbure du canal apical de la dent à traiter, le praticien entre les données de courbure dans l'appareil qui détermine en fonction d'une table de correspondance interne la séquence 7 d'outils à utiliser.

Le praticien sélectionne alors la première lime de la séquence sur l'appareil qui configure alors les paramètres de fonctionnement du moteur 5 adaptés à cette lime.

Lorsque le praticien change de lime, en choisissant par exemple la lime suivante dans la séquence, il doit sélectionner la nouvelle lime sur l'appareil ce qui l'oblige dans la technique actuelle à poser son contre angle pour entrer le changement de lime dans l'appareil.

Selon l'invention, le système de traitement dentaire comporte un dispositif 1 de commande de l'appareil de traitement dentaire constitué d'un boîtier portant au moins deux pédales, une première pédale 4 de commande marche/arrêt du moteur 5 d'entraînement de l'outil et une seconde pédale 6 commandant le changement de paramètres de fonctionnement de l'appareil de traitement dentaire en fonction de séquences 7 d'outils et pilotant l'affichage 8 desdits outils, paramètres et séquences sur l'appareil.

Pour permettre le transfert des informations d'appui sur les pédales, l'appareil et le dispositif comportent des moyens de communication et de dialogue l'un avec l'autre.

Le dispositif de commande de l'invention permet d'enrichir les fonctions commandées au pied par le praticien ce qui lui évite de poser son contre angle notamment lorsqu'il change de lime ou de séquence et améliore son confort de travail.

La première pédale 4 peut être une pédale tout ou rien qui commande uniquement la marche et l'arrêt du moteur ou être une pédale à commande proportionnelle en sorte de piloter la vitesse de rotation de l'outil en fonction de l'appui sur la pédale.

La liaison entre le dispositif de commande et l'appareil est préférablement réalisée par des moyens radio tels qu'une liaison bluetooth et, pour ce faire, le dispositif et l'appareil comportent chacun un module de transmission sans fil radiofréquence reliés entre eux au travers d'un protocole de communication leur permettant de dialoguer et d'échanger des données.

Outre le module de transmission, comme représenté schématiquement en figure 2, le dispositif 1 comporte des moyens de traitement et de calcul tels qu'un microcontrôleur et un circuit de commande adaptés à détecter la position de la première pédale et envoyer un code correspondant à cette position, code d'état logique 0 ou 1 dans le cas d'une pédale tout ou rien, code de position dans le cas d'une pédale proportionnelle, ce code étant transmis à l'appareil par le module de transmission.

Les moyens de traitement et de calcul du dispositif de commande sont en outre programmés pour transmettre un ou plusieurs codes correspondant à des appuis sur la seconde pédale pour transmettre à l'appareil des ordres de changement de paramètres ou de menu comme il sera vu ci-après.

Pour permettre une discrimination entre différents types d'appuis sur la seconde pédale, en particulier une discrimination entre des appuis courts et des appuis longs, l'appareil 2a et/ou le dispositif comportent des moyens de codage et de décodage de séquences d'appui multiples sur la seconde pédale 6.

Ces moyens sont en particulier adaptés à discriminer des appuis courts d'appuis longs en sorte d'associer des actions différentes aux dits appuis courts et appuis longs.

Les moyens de codage peuvent être réalisés par les moyens de traitement et de calcul du dispositif 1 et les moyens de décodage être réalisés dans l'appareil et, dans ce cas ils associent les codes envoyés par le dispositif à des actions à réaliser.

Une autre approche consiste à ce que le dispositif émette un code début d'appui et un code fin d'appui, l'appareil étant dans ce cas chargé de discriminer les appuis courts des appuis longs et générer les codes correspondants.

Par exemple, dans le cas où les moyens de codage sont intégrés au dispositif, selon le schéma de la figure 2, un appui sur la pédale P2 est transmis à un module de discrimination D comportant une entrée d'horloge H et des moyens de comptage du nombre d'impulsions d'horloge pendant l'appui sur la pédale va générer une valeur D1 représentative d'un appui court lors d'un tel appui sur la seconde pédale, transmettre cette valeur D1 au module de communication Bt (Bluetooth) qui l'émet par radio vers l'appareil de traitement dentaire qui décode la valeur transmise et réalise la fonction correspondante à cette valeur.

Une valeur D2 est par contre générée en réponse à un appui long sur la pédale et, cette valeur une fois émise vers puis décodée par l'appareil de traitement dentaire commandera la réalisation d'une fonction différente par cet appareil.

Selon un mode de réalisation particulier, le système constitué de l'appareil de traitement dentaire et du dispositif de l'invention comporte notamment des moyens adaptés à associer des changements de lime L1, L2, L3, ... dans une séquence de limes à des appuis courts sur la seconde pédale.

Pour confirmer la bonne prise en compte de l'appui court, l'appareil peut notamment émettre un son représentatif de cet appui court simultanément à l'affichage des paramètres de la nouvelle lime et à la programmation des paramètres moteur correspondants.

Si la séquence de limes comprend 4 limes, les appuis courts successifs sélectionneront les limes croissantes de 1 à 4, un appui court lorsque la quatrième lime est sélectionnée faisant revenir la sélection de la première lime.

Selon un mode de réalisation alternatif et/ou complémentaire, le système constitué de l'appareil de traitement dentaire et du dispositif comporte des moyens adaptés à associer des changements de séquences S1, S2, S3, ... de limes à des appuis longs sur la seconde pédale.

Pour ce faire, sur détection d'un appui long, le dispositif envoie à l'appareil de traitement dentaire le code correspondant à l'appui long, par exemple D2, et l'appareil décode ce code et effectue l'opération de changement d'affichage et de paramétrage de séquence correspondant.

Simultanément, l'appareil peut en outre émettre un son représentatif de l'appui long pour confirmer au praticien qu'un tel appui a bien été enregistré.

Un tel fonctionnement pour lequel les appuis courts sont mis en correspondance avec des changements de limes dans une séquence et les appuis longs sont mis en correspondance avec des changements de séquences est particulièrement adapté à des travaux nécessitant plusieurs séquences avec un nombre de limes par séquence réduit.

Selon un mode de fonctionnement alternatif, le système constitué de l'appareil de traitement dentaire et du dispositif comporte des moyens adaptés à associer à des appuis longs sur la seconde pédale des changements de lime (L1, L2, L3, ...) dans une séquence dans un ordre inverse aux changements de limes correspondant aux appuis courts.

Un tel mode de fonctionnement est adapté lorsque les séquences de travail comportent de nombreuses limes, le praticien pouvant dans ce cas monter la séquence avec des appuis courts et redescendre la séquence avec des appuis longs.

Selon un mode de réalisation alternatif schématisé en figure 3A, les appuis longs sur la pédale t > T sont un moyen de sélectionner des menus différents MENU1, MENU2, ... et le système constitué de l'appareil et du dispositif comporte des moyens adaptés à associer des changements de menus de l'appareil, tels que menu choix de lime et menu choix de séquence, à des appuis longs sur la seconde pédale.

Dans ce cas, selon le menu sélectionné, le système constitué de l'appareil et du dispositif comporte des moyens de calcul adaptés à associer des changements de paramètres Paramètre1, Paramètre2, ... de sous menu de l'appareil à des appuis courts t < T sur la seconde pédale.

La figure 3B illustre le fonctionnement pour un appareil comportant un menu séquences et un menu limes dans une séquence.

Dans le cas d'un menu séquence, les paramètres sont les différentes séquences S1, S2, S3, ... et dans le cas d'une menu limes dans une séquence Sn donnée, les paramètres sont les différentes limes L1, L2, L3, ... associées à une séquence donnée.

Par exemple, un appui long fera passer l'appareil d'un menu choix de lime à un menu choix de séquence alors qu'un appui court fera défiler les divers choix du menu, limes dans le cas du menu choix de limes, et, séquences dans le cas du menu choix de séquences.

Bien entendu, outre l'affichage de la lime ou de la séquence choisie, l'appareil adaptera simultanément les paramètres de fonctionnement du moteur en fonction de la lime et de la séquence choisie.

Un appui particulier tel qu'un appui simultané sur les deux pédales peut en outre être décodé pour passer d'un mode sélection de menus et un mode changement de limes.

Le dispositif peut être enrichi par d'autres fonction et notamment, selon un mode de réalisation avantageux, la première pédale commande, outre le moteur, un accessoire tel qu'une lampe d'éclairage du champ opératoire, la pédale constituant ainsi un moyen pour commander, outre le moteur, un accessoire tel qu'une lampe d'éclairage du champ opératoire.

L'invention n'est pas limitée aux exemples représentés et, en particulier, le système peut comprendre un dispositif pourvu de boutons ou pédales supplémentaires, par exemple pour valider des choix de sous menus, pour enrichir son fonctionnement tout en restant dans le cadre de l'invention.

## Revendications

1. dispositif (1) de commande d'un appareil (2a, 2b) de traitement dentaire pilotant des outils tournants (3), le dispositif comprenant une première pédale (4) de commande marche/arrêt d'un moteur (5) d'entraînement de l'outil, **caractérisé en ce qu'**il comprend une seconde pédale (6) commandant le changement de paramètres de fonctionnement de l'appareil de traitement dentaire en fonction de séquences (7) d'outils et l'affichage (8) desdits outils, paramètres et séquences sur l'appareil.

2. dispositif de commande d'un appareil de traitement dentaire selon la revendication 1 pour lequel la première pédale (4) est une pédale à commande proportionnelle en sorte de piloter la vitesse de rotation de l'outil en fonction de l'appui sur la pédale.

3. dispositif de commande selon la revendication 1 ou 2 pour lequel l'appareil (2a) et/ou le dispositif comportent des moyens de codage et de décodage de séquences d'appui multiples sur la seconde pédale (6) adaptés à discriminer des appuis courts d'appuis longs en sorte d'associer des actions différentes aux dits appuis courts et appuis longs.

4. dispositif de commande selon la revendication 3 pour lequel le système constitué de l'appareil et du dispositif comporte des moyens adaptés à associer des changements de lime (L1, L2, L3, ...) dans une séquence de limes à des appuis courts sur la seconde pédale.

5. dispositif de commande selon la revendication 4 pour lequel le système constitué de l'appareil et du dispositif comporte des moyens adaptés à associer à des appuis longs sur la seconde pédale des changements de lime (L1, L2, L3, ...) dans une séquence dans un ordre inverse aux changements de limes correspondant aux appuis courts.

6. dispositif de commande selon la revendication 3 ou 4 pour lequel le système constitué de l'appareil et du dispositif comporte des moyens adaptés à associer des changements de séquences (S1, S2, S3, ...) de limes à des appuis longs sur la seconde pédale.

7. dispositif de commande selon la revendication 3 pour lequel le système constitué de l'appareil et du dispositif comporte des moyens adaptés à associer des changements de menus de l'appareil, tels que menu choix de lime et menu choix de séquence, à des appuis longs sur la seconde pédale.

8. dispositif de commande selon la revendication 7 pour lequel, selon le menu sélectionné, le système constitué de l'appareil et du dispositif comporte des moyens adaptés à associer des changements de paramètres de sous menu de l'appareil à des appuis courts sur la seconde pédale.

9. dispositif de commande selon l'une des revendications précédentes **caractérisé en ce que** la première pédale constitue un moyen pour commander, outre le moteur, un accessoire tel qu'une lampe d'éclairage du champ opératoire.

10. dispositif de commande selon l'une des revendications précédentes **caractérisé en ce qu'**il comporte un module de transmission sans fil radiofréquence.

11. Système de traitement dentaire **caractérisé en ce qu'**il comporte un dispositif de commande selon l'une des revendications précédentes et un appareil de traitement dentaire, l'appareil et le dispositif comportant des moyens de communication et de dialogue l'un avec l'autre.
